# EUROPÄISCHE PATENTSCHRIFT

(11) **EP 3 856 601 B1**
(45) Veröffentlichungstag und Bekanntmachung des Hinweises auf die Patenterteilung: **09.09.2026**
(21) Anmeldenummer: 19736363.3
(22) Anmeldetag: 03.07.2019
(51) Int. Cl.: B60W 50/14, B60W 40/08

(54) **VERFAHREN ZUR SCHÄTZUNG DER AUFMERKSAMKEIT DES FAHRERS EINES FAHRZEUGS**
METHOD FOR ESTIMATING THE ATTENTIVENESS OF THE DRIVER OF A VEHICLE
PROCÉDÉ PERMETTANT D'ÉVALUER L'ATTENTION DU CONDUCTEUR D'UN VÉHICULE

(30) Priorität: 26.09.2018 DE 102018216511
(43) Veröffentlichungstag der Anmeldung: 04.08.2021
(73) Patentinhaber: Volkswagen Aktiengesellschaft, 38440 Wolfsburg (DE)
(72) Erfinder: BÜTHORN, Robert, 10318 Berlin (DE); MEHNE, Frank, 10245 Berlin (DE)
(86) Internationale Anmeldenummer: PCT/EP2019/067811
(87) Internationale Veröffentlichungsnummer: WO 2020/064160

(56) Entgegenhaltungen:
- DE-A1- 102012 013 546
- DE-A1- 102013 210 682
- US-A1- 2016 046 298
- US-B2- 9 707 971

## Beschreibung

Die vorliegende Erfindung betrifft ein Verfahren zur Schätzung der Aufmerksamkeit des Fahrers eines Fahrzeugs. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

Systeme zur Müdigkeitserkennung von Fahrern von Kraftfahrzeugen bzw. zur Kontrolle der Wachsamkeit der Fahrer sind seit geraumer Zeit bekannt. So beschreibt die DE 28 22 788 A1 zur Kontrolle der Reaktionszeit eines Kraftwagenfahrers während der Fahrt die Betätigung von mehreren Bedienelementen wie der Bremse, Kupplung und des Fahrtrichtungsanzeigers zu überwachen. Werden die überwachten Bedienelemente über eine bestimmte Zeitperiode nicht betätigt, wird ein Aufforderungssignal abgegeben. Wenn die zum Aufheben des Aufforderungssignals erforderliche Reaktion seitens des Fahrers ausbleibt, wird erst ein Warnsignal und darauffolgend ein auch in der Umgebung des Fahrzeuges wahrnehmbares Alarmsignal abgegeben.

Weiterhin ist es bekannt, über Sensoren das Fahrverhalten eines Fahrers zu überwachen bzw. zu analysieren. So kann durch Erfassung der befahrenen Fahrspur bzw. der Fahrbahnbegrenzungen mithilfe eines Kamerasystems, insbesondere einer Frontkamera, das Spurhalteverhalten des Fahrers ausgewertet werden. Ein ähnlicher Ansatz ist die Analyse des Lenkverhaltens des Fahrers. Das Lenkrad wird bei normaler Fahrweise permanent durch den Fahrer leicht bewegt. Bei Müdigkeit setzt dieses unbewusste Regelverhalten aber häufig kurzzeitig aus, sodass der Fahrer das Lenkrad starr hält, um dann zur Korrektur mit erhöhter Geschwindigkeit stärkere Lenkbewegungen durchzuführen. Diese auf charakteristische Weise erfolgenden Lenkkorrekturen können erkannt werden, sodass rechtzeitig hierauf reagiert werden kann.

Die DE 10 2012 012 667 A1 offenbart, Spurinformationen statt mit einer optischen Spurerfassungseinheit mittels eines satellitengestützten Navigationssystems und im Fahrzeug hinterlegter digitaler Kartendaten zu ermitteln. Durch einen Vergleich mit dem zusätzlich erfassten Lenkverhalten des Fahrers kann ein Aufmerksamkeitsgrad eines Fahrers des Fahrzeuges ermittelt wird.

Ferner ist bekannt, über optische Sensoren wie Innenraumkameras den Fahrer zu beobachten, um mittels Überwachung der Augen eine Aussage über den Zustand des Fahrers, insbesondere zur möglichen Ermüdung, zu treffen.

Schließlich gibt es auch Systeme, die mit geeigneten Sensoren die Leitfähigkeit der Haut messen, um auf den Zustand des Fahrers schließen zu können.

Die US 9 707 971 B2 betrifft ein Verfahren zur Diagnose des Fahrverhaltens. Hierbei werden diverse Daten erfasst, die sich auf den Betriebszustand eines Fahrzeugs beziehen. Auf der Grundlage dieser Daten wird ein gefährliches Fahrverhalten durch einen Nutzer des Fahrzeugs detektiert. Eine Ursachenschätzung ("cause estimation") für dieses gefährliche Fahrverhalten und eine Diagnose des Fahrverhaltens wird dann durchgeführt.

Die DE 10 2012 013546 A1 offenbart ein Verfahren zum Betrieb einer Assistenzvorrichtung eines Fahrzeuges, wobei ein Maß einer Aufmerksamkeit eines Fahrers ermittelt wird und das Maß dem Fahrer optisch angezeigt wird. Hierbei wird das angezeigte Maß mit zunehmender Fahrdauer kontinuierlich verringert.

Die US 2016/046298 A1 offenbart ein System zum Detektieren des Verhaltens eines Fahrers eines aus Zugmaschine und Anhänger bestehenden Gespanns, bei dem ein Bewegungssensorsystem Bewegungen des Fahrers während des Betriebs des Fahrzeugs erfasst und auswertet. Als Reaktion auf ein erkanntes Ablenkungsereignis des Fahrers wird hierbei eine Warnmeldung an eine Benutzerschnittstelle in der Zugmaschine oder an ein entferntes System übermittelt.

Die DE 10 2013 210682 A1 offenbart ein Verfahren zur Beurteilung und/oder Aufrechterhaltung der Aufmerksamkeit eines Fahrzeugführers, bei dem eine Aufforderung zur Durchführung einer Bedienaktion an den Fahrzeugführer erfolgt, eine Reaktionszeit bis zur Durchführung der Bedienaktion ermittelt wird und in Abhängigkeit der ermittelten Reaktionszeit die Beurteilung der Aufmerksamkeit des Fahrzeugführers erfolgt.

Es ist eine Aufgabe der Erfindung, ein verbessertes Verfahren zur Schätzung der Aufmerksamkeit des Fahrers eines Fahrzeugs zur Verfügung zu stellen.

Diese Aufgabe wird durch ein Verfahren mit den Merkmalen des Anspruchs 1 gelöst. Bevorzugte Ausgestaltungen der Erfindung sind Gegenstand der abhängigen Ansprüche.

Die Erfindung beruht auf der Erkenntnis, dass die Aufmerksamkeit eines Fahrers zwar stark von der körperlichen Verfassung des Fahrers beeinflusst wird und durch Müdigkeit oder Erschöpfung stark abnimmt, aber auch durch kurzfristige Bedientätigkeiten im Fahrzeuginnenraum herabgesetzt wird.

Bei dem erfindungsgemäßen Verfahren zur Schätzung der Aufmerksamkeit des Fahrers eines Fahrzeugs wird
- mit einer langfristigen Schätzung der Aufmerksamkeit des Fahrers ein erster Aufmerksamkeitswert ermittelt, wobei der erste Aufmerksamkeitswert
   - ab Fahrtbeginn mit zunehmender Fahrdauer des Fahrzeugs abnimmt; und
   - in geringerem Maß verringert wird, wenn eine Betätigung von Bedienelementen des Fahrzeugs durch den Fahrer erfasst wird;
- eine Betätigung von Bedienelementen des Fahrzeugs durch den Fahrer erfasst;
- basierend auf der erfassten Betätigung mit einer kurzfristigen Schätzung der Aufmerksamkeit des Fahrers ein zweiter Aufmerksamkeitswert ermittelt, wobei der zweite Aufmerksamkeitswert
   - eine Schätzung der Ablenkung des Fahrers durch eine Betätigung von Bedienelementen des Fahrzeugs durch den Fahrer angibt,
   - in Abhängigkeit von der Komplexität, Erreichbarkeit und/oder dem Feedback des jeweils betätigten Bedienelements verändert wird, wobei unterschiedlichen Bedienelementen je nach deren Komplexität, Erreichbarkeit und/oder dem Feedback unterschiedliche vordefinierte Werte zugewiesen sind,
   - ausgehend von einem Startwert bei Erfassung einer erstmaligen Betätigung eines Bedienelements und bei darauf folgenden Betätigungen von Bedienelementen, die nach der vorherigen Betätigung eines Bedienelement innerhalb einer vordefinierten Zeitspanne erfolgen, jeweils um einen dem betätigten Bedienelement zugewiesenen Wert erhöht wird und auf den Startwert zurückgesetzt wird, wenn innerhalb der vordefinierten Zeitspanne keine Betätigung eines Bedienelement erfasst wurde.

Auf diese Weise wird die Abnahme der Aufmerksamkeit eines Fahrers sowohl durch langfristige Effekte wie Müdigkeit oder Erschöpfung als auch durch kurzfristige Einflüsse wie Bedientätigkeiten abgeschätzt. Weiterhin ist die Schätzung möglich, ohne dass speziell hierfür einer oder mehrere Sensoren im Fahrzeug verbaut sein müssen. Damit können die Kosten für solche Sensoren und Probleme mit der Müdigkeitserkennung bei einem Defekt der Sensoren oder bei ungewöhnlichem Fahrverhalten des Fahrers vermieden werden. Vorteilhafterweise wird in Abhängigkeit von dem ersten und/oder zweiten Aufmerksamkeitswert eine Meldung an den Fahrer ausgegeben oder eine Fahrzeugfunktion ausgelöst.

Erfindungsgemäß wird für die langfristige Schätzung mindestens ein die Aufmerksamkeit beeinflussender Parameter ermittelt, wobei der erste Aufmerksamkeitswert in Abhängigkeit von dem ermittelten Parameter unterschiedlich stark abnimmt.

Vorteilhafterweise werden einer oder mehrere der folgenden Parameter ermittelt:
- ein die Monotonie der Fahraufgabe wiedergebender Monotoniewert, der aus erfassten Fahrzeugparametern errechnet wird;
- eine Betätigung von Bedienelementen des Fahrzeugs durch den Fahrer;
- eine Nutzung einer Telefoniefunktion des Fahrzeugs durch den Fahrer;
- eine Uhrzeit, die dem Zeitpunkt, zu der die Fahrt angetreten wurde, oder dem aktuellen Zeitpunkt entspricht.

Besonders vorteilhaft wird eine Meldung mit Pausenempfehlung an den Fahrer ausgegeben oder ein teil- oder vollautonomer Fahrmodus aktiviert, wenn der erste Aufmerksamkeitswert einen vordefinierten Schwellwert erreicht oder unterschreitet.

Vorzugsweise wird eine Meldung mit einer Aufforderung zur Rückbesinnung auf die primäre Fahraufgabe an den Fahrer ausgegeben, wenn der zweite Aufmerksamkeitswert einen vordefinierten Schwellwert erreicht oder überschreitet.

Hierbei kann es vorteilhaft sein, wenn der vordefinierte Schwellwert für den zweiten Aufmerksamkeitswert von der aktuellen Geschwindigkeit des Fahrzeugs abhängt.

Die Erfindung betrifft auch eine Vorrichtung, die eingerichtet ist, ein solches Verfahren auszuführen und ein Kraftfahrzeug, in dem das erfindungsgemäße Verfahren oder die erfindungsgemäße Vorrichtung eingesetzt wird.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Flussdiagramm für ein Ausführungsbeispiel des erfindungsgemäßen Verfahrens zur Schätzung der Aufmerksamkeit des Fahrers eines Fahrzeugs;
- Fig. 2: zeigt beispielhaft einen zeitlichen Verlauf für den Aufmerksamkeitsindex für die langfristige Schätzung der Fahreraufmerksamkeit;
- Fig. 3: zeigt schematisch eine erste geschwindigkeitsabhängige Charakteristik der Meldeschwelle für die kurzfristige Schätzung der Fahreraufmerksamkeit; und
- Fig. 4: zeigt schematisch eine zweite geschwindigkeitsabhängige Charakteristik der Meldeschwelle für die kurzfristige Schätzung der Fahreraufmerksamkeit.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

Erfindungsgemäß wird einerseits ein langfristiger Schätzer, im Folgenden auch mit LFS abgekürzt, zur Einschätzung der Aufmerksamkeitskapazität des Fahrers eingesetzt, um bei einer potentiellen Ermüdung des Fahrers beispielsweise eine Pausenempfehlung ausgeben zu können. Zusätzlich erfolgt eine Schätzung der Aufmerksamkeit bezogen auf eine kurzfristige Zeitskala, womit kritische Defizite in der Fahreraufmerksamkeit, hervorgerufen durch Bedientätigkeiten an Bedienelementen des Fahrzeugs, detektiert werden können. Diese Detektion kann beispielsweise zur Ausgabe einer Aufforderung zur Rückbesinnung auf die primäre Fahraufgabe genutzt werden. Dieser kurzfristige Aufmerksamkeitsschätzer wird folgend auch mit KFS abgekürzt.

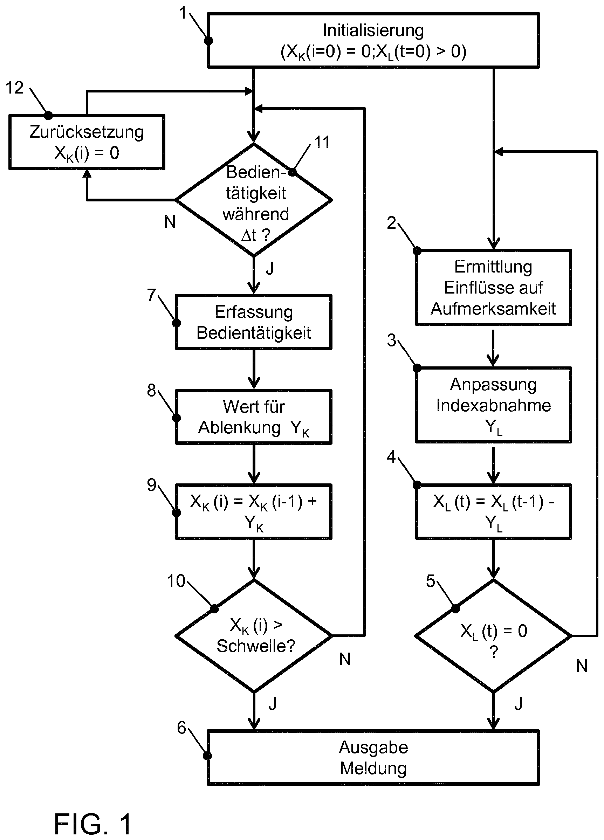

Figur 1 zeigt schematisch ein Flussdiagramm für ein Ausführungsbeispiel des erfindungsgemäßen Verfahrens. Das Verfahren startet zu Beginn jeder Fahrt neu. Gemäß Verfahrensschritt 1 erfolgt zunächst eine Initialisierung sowohl des langfristigen Schätzers LFS als auch des langfristigen Schätzers KFS. Bei dem hier beschriebenen

Ausführungsbeispiel erhält der Aufmerksamkeitsindex X_{L} des Aufmerksamkeitsschätzers LFS bei Fahrtbeginn initial einen Startwert X_{L} > 0 (z.B. X_{L} = 100). Sobald die Fahrt gestartet wird, beginnt der Aufmerksamkeitsindex X_{L} zu fallen. Die Abnahme des Aufmerksamkeitsindexes X_{L} setzt sich während der Fahrt kontinuierlich fort und spiegelt damit die zunehmende Ermüdung bzw. Erschöpfung des Fahrers mit zunehmender Fahrtdauer wieder.

Die Verringerung der Aufmerksamkeit des Fahrers hängt jedoch nicht nur von der zunehmenden Fahrtdauer, sondern auch von auf den Fahrer einwirkenden externen Einflüssen sowie Tätigkeiten des Fahrers während der Fahrt ab. So wirken sich insbesondere die Monotonie der Fahraufgabe bzw. -situation, Bedientätigkeiten von Bedienelementen des Fahrzeugs sowie des Telefons, aber auch die Tageszeit bei Fahrtantritt und während der Fahrt deutlich auf die Aufmerksamkeit des Fahrers aus. Einer oder mehrere dieser Einflüsse werden in Verfahrensschritt 2 erfasst.

Die Monotonie der Fahraufgabe/-situation kann hierbei insbesondere aus Messdaten zu Fahrzeugparametern wie dem Geschwindigkeitsverlauf, der zeitlichen Abfolge der Lenkbewegungen bzw. der Veränderungen des Lenkwinkels, der Gierrate, der Anzahl der Bremsungen, der Fahrpedalstellung und dem Fahrpedalgradient errechnet werden. Zusätzlich kann auch mit einem Navigationssystem der Streckenverlauf berücksichtigt werden. So kann beispielsweise davon ausgegangen werden, dass bei einem über einen längeren Zeitraum geradlinigen Verlauf einer Straße, insbesondere außerhalb geschlossener Ortschaften, die Fahraufgabe monotoner ist als innerhalb einer Ortschaft mit einer Vielzahl von Kreuzungen, Ampeln oder Fahrtrichtungswechsel entlang des Streckenverlaufs.

Die Berechnung der Monotonie der aktuellen Fahrsituation erfolgt durch die Analyse der oben beschriebenen Fahrzeugparameter. Hierbei können beispielsweise die folgenden Aspekte ausgewertet werden:
Die Monotonie steigt mit geringen Werten der Standardabweichung in der gemessenen Geschwindigkeit, Gierrate und Fahrpedalstellung. Die Monotonie steigt außerdem mit einer geringen Anzahl von durch den Fahrer getätigten Bremsvorgängen. Entsprechend fällt der Wert der Monotonie bei großen Werten der Standardabweichung in der gemessenen Geschwindigkeit, Gierrate und Fahrpedalstellung. Ebenso fällt die Monotonie bei einer steigenden Anzahl von Bremsvorgängen. Auf diese Weise wird die Monotonie der Fahraufgabe modelliert, da viele Änderungen in den genannten Fahrzeugsignalen auf aktive Änderungen der Fahrtcharakteristik hindeuten, was auf eine erhöhte Aktivität und somit Aufmerksamkeit des Fahrers schließen lässt. Hohe Monotoniewerte führen damit zu einem schnelleren Abfall des Aufmerksamkeitsindexes X_{L}, niedrige Monotoniewerte zu einem langsameren Abfall.

Ebenso haben Bedientätigkeiten von in dem Fahrzeug vorhandenen Bedienelementen, wie beispielsweise Bedienelementen für den Fensterheber, den Blinker, das Radio oder die Navigationseinheit des Fahrzeugs einen Einfluss auf die Aufmerksamkeit des Fahrers. Diese Bedienhandlungen gehen einerseits in die Schätzung der langfristigen Aufmerksamkeit ein, andererseits werden Bedienhandlungen auch, wie weiter unten beschrieben, detailliert für die Schätzung der kurzfristigen Aufmerksamkeit analysiert.

Im langfristigen Kontext bedeuten Bedientätigkeiten des Fahrers eine generelle Aktivität des Fahrers, die sich positiv auf die Leistungsfähigkeit des Fahrers auswirkt. Es wird hierbei davon ausgegangen, dass ein Fahrer, der Bedientätigkeiten während der Fahrt ausführt, aktiver und somit aufmerksamer ist als ein Fahrer der keine Bedientätigkeiten ausführt. Entsprechend fällt der Aufmerksamkeitsindexes X_{L} für einen Fahrer, der während der Fahrt kaum Bedienhandlung vornimmt, schneller als für einen Fahrer, der häufig während der Fahrt Bedienelemente des Fahrzeugs betätigt. In ähnlicher Weise wird die Benutzung des Telefons durch den Fahrer berücksichtigt, da ein telefonierender Fahrer vor allem kognitiv aktiver ist und durch das Telefongespräch von der gegebenenfalls als monoton gefunden Fahraufgabe abgelenkt wird und so langsamer ermüdet. Entsprechend fällt der Aufmerksamkeitsindex X_{L} für einen telefonierenden Fahrer weniger stark ab.

Schließlich wird auch die Leistungsfähigkeit des Fahrers je nach aktueller Uhrzeit berücksichtigt. Hierbei wird aufgrund des circadianem Rhythmus des Menschen davon ausgegangen, dass Fahrer nachts grundsätzlich weniger leistungsfähig und aufmerksam sind als am Tag. Entsprechend fällt der Aufmerksamkeitsindex X_{L} nachts schneller ab als am Tag.

In Verfahrensschritt 3 wird die negative Steigung, mit der sich der Aufmerksamkeitsindex X_{L} verringert, an die aktuell erfassten Einflüsse auf den Fahrer angepasst. Hierfür können beispielsweise in einer Lookup Table (LUT) für die verschiedenen, die Aufmerksamkeit des Fahrers beeinflussenden Parameter je nach Vorliegen des jeweiligen Einflusses und dem ggfs. gleichzeitigen Vorhandensein anderer Einflüsse vorberechnete Werte hinterlegt sein.

Auf diese vordefinierten Werte kann dann für die langfristige Schätzung der Aufmerksamkeit des Fahrers zugegriffen werden.

In Verfahrensschritt 4 wird dann ein aktualisierter Aufmerksamkeitsindex X_{L} entsprechend den aktuellen vorliegenden Einflüssen berechnet. Dieses kann, ebenso wie die Verfahrensschritte 2 und 3 in regelmäßigen Zeitabständen erfolgen. Ebenso ist es aber auch möglich, beispielsweise eine Anpassung bzw. Neuberechnung in Abhängigkeit der Erfassung einer oder mehrerer Bedientätigkeiten oder dem Beginn eines Telefonats durchzuführen.

Nach einer Berechnung des aktualisierten Aufmerksamkeitsindexes X_{L} wird in Verfahrensschritt 5 überprüft, ob der langfristige Aktivitätsschätzer LFS einen Schwellwert, insbesondere den Wert X_{L} = 0, erreicht hat. Ist dieses noch nicht der Fall, so kehrt der langfristige Aktivitätsschätzer LFS zum Verfahrensschritt 2 zurück. Ist dagegen der Schwellwert erreicht, so wird dem Fahrer in Verfahrensschritt 6 eine Pausenempfehlung ausgegeben. Folgt der Fahrer dieser Pausenempfehlung und legt eine Pause ein, so kann vorgesehen werden, diese Fahrtpause durch den Stillstand des Fahrzeugs zu detektieren und während der Pausenzeit die Abnahme des Indexes zu unterbrechen. Ebenso kann vorgesehen werden bei einer Fahrtpause, die ausreichend lang für eine Erholung des Fahrers ist, bei Fortsetzung der Fahrt die Aufmerksamkeitsschätzung erneut durch eine Initialisierung gemäß Verfahrensschritt 1 zu starten.

Zusätzlich zu der Schätzung der Fahreraufmerksamkeit mit dem beschriebenen langfristigen Aufmerksamkeitsschätzer LFS wird diese gleichzeitig auch mit einem kurzfristigen Aufmerksamkeitsschätzer KFS bewertet. Hierfür werden, ebenso wie bei der langfristigen Schätzung, Bedientätigkeiten des Fahrers detektiert. Im kurzfristigen Kontext bedeuten diese eine Abwendung der Aufmerksamkeit von der Fahraufgabe, d.h. je mehr Bedientätigkeiten durch den Fahrer innerhalb eines kurzen Zeitraums erfolgen, desto negativer ist der Einfluss auf die Aufmerksamkeit des Fahrers. Die Bedientätigkeiten werden also bei der kurzfristigen Aufmerksamkeitsschätzung, anders als bei der langfristigen Aufmerksamkeitsschätzung, als negativer Einfluss auf die Aufmerksamkeit des Fahrers gewertet.

Ein Aufmerksamkeitsindex X_{K} des Aufmerksamkeitsschätzers KFS wird hierbei in Verfahrensschritt 1 ebenfalls initial auf einen Startwert X_{K} (z.B. X_{K} = 0) gesetzt. In Abhängigkeit von Bedientätigkeiten des Fahrers, wird dieser Aufmerksamkeitsindex X_{K} für die kurzfristige Aufmerksamkeitsschätzung dann fortlaufend angepasst. Hierzu wird zunächst in Verfahrensschritt 7 eine Betätigung eines Bedienelementes im Fahrzeuginnenraum erfasst.

Für die Schätzung der Ablenkung bei der Bedienung eines Bedienelements werden die verschiedenen Bedienelemente im Fahrzeug jeweils mit einem individuellen Wert Y_{K} belegt. Dieser Wert richtet sich nach der Komplexität, Erreichbarkeit und dem Feedback des jeweiligen Bedienelements. Hierbei haben beispielsweise schlecht erreichbare, komplexe Bedienelemente, die bei Betätigung eine visuelle Kontrolle benötigen, einen besonders hohen Wert. Gut erreichbare, wenig komplexe Bedienelemente, die ein haptisches oder akustisches Feedback geben, haben dagegen einen niedrigen Wert. Je nachdem, für welches Bedienelement eine Betätigung erfasst wurde, wird in Verfahrensschritt 8 der diesem Bedienelement zugewiesene Wert ermittelt, beispielsweise indem dieser ebenfalls aus einer Lookup-Table abgefragt wird.

In Abhängigkeit von dem Wert für die Ablenkung durch die aktuell erfasste Betätigung des Bedienelements wird der Aufmerksamkeitsindex X_{K} nun in Verfahrensschritt 9 aktualisiert, in dem dieser Wert auf den bisherigen Wert des Aufmerksamkeitsindexes X_{K} aufsummiert wird.

In Verfahrensschritt 10 wird dann geprüft, ob in Folge der bisher erfassten Bedientätigkeiten ein dynamischer Schwellwert überschritten wurde. Ist dies der Fall, so wird in Verfahrensschritt 6 eine Meldung ausgegeben, die den Fahrer zur Rückbesinnung auf die primäre Fahraufgabe auffordert. Ergibt die Überprüfung in Verfahrensschritt 10 dagegen, dass der Schwellwert noch nicht überschritten wurde, so wird die kurzfristige Aufmerksamkeitsschätzung zur Erfassung weiterer Bedientätigkeiten fortgesetzt.

Hierbei wird zunächst in Verfahrensschritt 11 überprüft, ob innerhalb einer vordefinierten Zeitspanne eine weitere Betätigung erfolgt. Wenn dieses der Fall ist, so wird die kurzfristige Schätzung mit Verfahrensschritt 7 fortgesetzt. Wird dagegen innerhalb der vordefinierten Zeitspanne keine weitere Betätigung detektiert, so wird der bisher aufsummierte Wert des Aufmerksamkeitsindexes X_{K} auf den Startwert zurückgesetzt. Auf diese Weise wird sichergestellt, dass auch bei längeren Fahrten eine sporadische Bedienung gut erreichbarer, wenig komplexer Bedienelemente, wie beispielsweise das gelegentliche Betätigen des Blinkers, nicht zu einem Überschreiten des Schwellwertes und damit zu einer Fehleinschätzung der Fahreraufmerksamkeit führt. Ebenso kann vorgesehen werden, dass aufeinanderfolgende Bedienhandlungen des gleichen Bedienelements erst nach einer gewissen Zeitdauer eine Erhöhung des Aufmerksamkeitsindexes X_{K} nach sich ziehen.

Die an den Fahrer ausgegebene Meldung kann hierbei auf unterschiedliche Weise erfolgen. So kann ein akustisches, optisches und/oder haptisches Signal ausgegeben werden. Eine akustische Meldung kann hierbei beispielsweise in Form eines Signaltons oder einer Sprachausgabe mit einem entsprechenden Hinweis ausgestaltet sein. Eine optisch wahrnehmbare Meldung kann beispielsweise durch die Darstellung eines Hinweises auf dem Cockpit oder Head-up-Display erfolgen. Eine haptisch wahrnehmbare Meldung kann beispielsweise durch Vibration des Lenkrades oder des Fahrersitzes ausgegeben werden. Es kann hierbei auch eine Reaktion von dem Fahrer, wie das Betätigen einer Taste oder eine Sprachkommunikation mit einem Assistenzsystem eingefordert werden. Wenn daraufhin jedoch keine Reaktion von dem Fahrer erfolgen sollte, kann weiterhin vorgesehen werden, automatisch einen teil- oder vollautonomen Fahrmodus zu aktivieren.

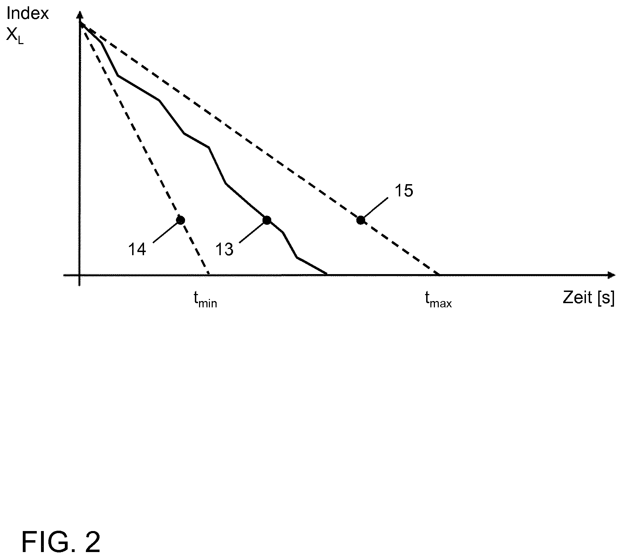

Figur 2 zeigt beispielhaft einen zeitlichen Verlauf 13 für den Aufmerksamkeitsindex X_{L} des langfristigen Schätzers LFS. Je nach den erfassten, die Aufmerksamkeit des Fahrers beeinflussenden Einflüssen nimmt der Index während der Fahrtdauer ab. Diese Einflüsse können während der Fahrt variieren bzw. unterschiedlich stark ausgeprägt sein und führen dazu, dass der Index über die Zeit für unterschiedliche Zeitbereiche unterschiedlich stark abnimmt, wie in dem zeitlichen Verlauf 13 durch die Teilstücke mit unterschiedlicher negativer Steigung zum Ausdruck kommt. Wenn alle erfassbaren Einflüsse während der ganzen Fahrzeit vorliegen würden, so würde der Index mit gleichbleibender negativer Steigung entlang der gestrichelten Geraden 14 fallen und bereits nach einer Zeit tₘᵢₙ (z.B. 3600 sec) die Ausgabe einer Pausenempfehlung bewirken. Aber auch wenn während der gesamten Fahrtdauer keinerlei negative Einflüsse erfasst werden, nimmt die Aufmerksamkeit des Fahrers mit zunehmender Fahrtdauer ab, nun entlang der gestrichelten Geraden 15, sodass spätestens nach einer Zeit tₘₐₓ (z.B. 18000 sec) die Pausenempfehlung ausgegeben werden würde.

Wertebereiche für die berücksichtigten Einflüsse können hierbei beispielsweise sein:
Monotonie der Fahraufgabe: -1 bis +1
Bedientätigkeiten: 0 und 1
Leistungsabweichung je nach aktueller Uhrzeit (circadianer Rhythmus): -0,5 bis 0,2

Damit würde sich als minimaler Einfluss ein Wert von -1,5 und als maximaler Einfluss ein Wert von 2,2 ergeben.

Wie bereits erwähnt, kann basierend auf den Merkmalen "Komplexität" und "Erreichbarkeit" einem Bedienelement ein Ablenkungspotential zugewiesen werden. Die Komplexität eines Bedienelements ergibt sich insbesondere aus der Anzahl der durch das Bedienelement bedienbaren Funktionen und erhöht sich mit zunehmender Anzahl. Die Komplexität beschreibt also, wie stark die Aufmerksamkeit des Fahrers allein von der Auswahl der richtigen Funktion in Anspruch genommen wird. Grundsätzlich kommen hierbei alle Bedienelemente in Betracht, die durch den Fahrer im Fahrzeug bedient werden können.

Bedienelement mit nur geringer Komplexität sind beispielsweise Ein-/Ausschalter für bestimmte Fahrzeugfunktionen bzw. -komponenten, zum Beispiel für eine beheizbare Heckscheibe. Ein Beispiel für ein Bedienelement mit im Vergleich hierzu höherer Komplexität ist das Verstellelement für die Seitenspiegel des Fahrzeugs, da an dem Bedienelement sowohl ausgewählt werden kann, auf welcher Seite der Seitenspiegel verstellt werden soll, aber auch in welcher Richtung der ausgewählte Seitenspiegel verstellt werden soll oder ob etwa die Seitenspiegel angeklappt werden sollen. Weiterhin muss gegebenenfalls mit einem Blick kontrolliert werden, ob die richtige Einstellung gewählt wurde, was zusätzlich noch eine Blickabwendung von der vor dem Fahrzeug liegenden Straße mit sich bringt.

Ein Bedienelement mit sehr hoher Komplexität liegt mit einem zentralen Infotainmentsystem vor. Dieses ermöglicht die zentrale Steuerung von Radio, Navigation und Multimedia-, sowie Internet-Anwendungen. Weiterhin können über das Infotainmentsystem verschiedene Fahrzeugstatusmeldungen angezeigt werden und Fahrzeugeinstellungen vorgenommen werden. Hierfür können zahlreiche Menüs und Untermenüs vorgesehen sein, die teilweise eine umfassende Navigation durch den Nutzer erfordern, um die erwünschten Informationen abrufen bzw. Einstellungen des Fahrzeugs vornehmen zu können. Damit kann sowohl die Anzahl der bedienbaren Funktionen als auch der kognitive Aufwand, die gewünschte Funktion auszuwählen, sehr hoch sein.

Das Merkmal der Erreichbarkeit eines Bedienelements hängt von dem Ort der Verbauung des jeweiligen Bedienelements im Fahrzeug ab. So kann beispielsweise der Wischerhebel bedient werden, ohne die Hände vom Lenkrad lösen zu müssen, die Erreichbarkeit ist somit sehr gut. Für die Betätigung der elektrischen Fensterheber muss dagegen eine Hand vom Lenkrad gelöst werden. Das Bedienelement ist damit noch im Greifraum des Fahrers, jedoch verbleiben nicht mehr beide Hände am Lenkrad. Die Erreichbarkeit ist somit im Vergleich zum Wischerhebel schlechter.

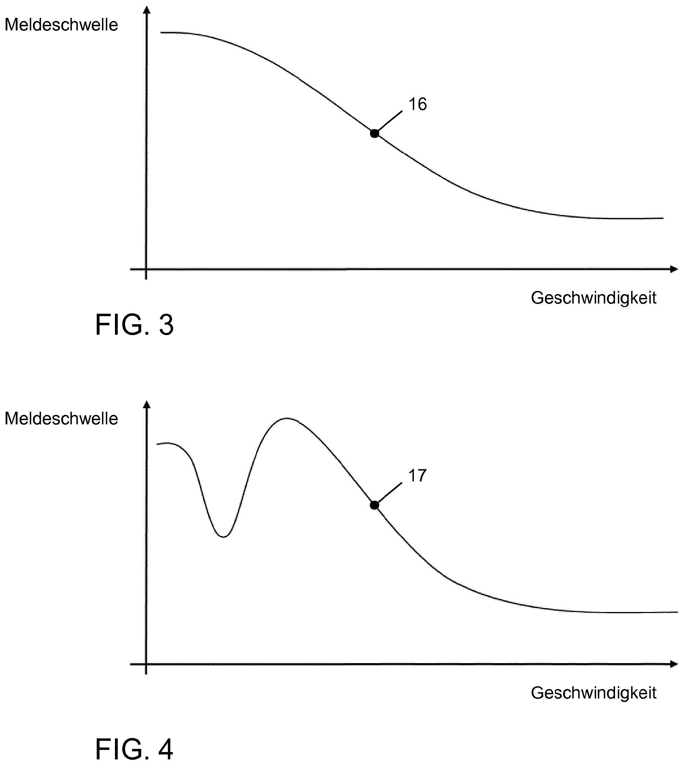

Die Figuren 3 und 4 zeigen schematisch geschwindigkeitsabhängige Charakteristiken der Meldeschwelle für die kurzfristige Schätzung der Fahreraufmerksamkeit. Dargestellt ist der jeweilige Schwellwert in Abhängigkeit von der aktuellen Geschwindigkeit des Fahrzeugs. Wird dieser dynamische Schwellwert erreicht bzw. überschritten, so wird auf eine deutliche Ablenkung des Fahrers geschlossen, die bei der vorliegenden Geschwindigkeit zu einer Gefährdung führen kann, und eine Meldung ausgegeben, die den Fahrer zur Rückbesinnung auf die primäre Aufgabe auffordert.

Bei der in Figur 3 dargestellten Charakteristik 16 nimmt der Schwellwert mit zunehmender Geschwindigkeit des Fahrzeugs stetig ab. Mit dieser Charakteristik wird dem Umstand Rechnung getragen, dass insbesondere Bedienhandlungen mit Blickabwendungen während schneller Fahrt wesentlich kritischer und gefährlicher sein können als bei langsamer Fahrt. Der dargestellte Verlauf ist hierbei exemplarisch, ebenso kann beispielsweise auch eine lineare Abnahme der Meldeschwelle mit zunehmender Geschwindigkeit oder eine stufenförmige Abnahme mit jeweils gleichbleibenden Meldeschwellen innerhalb bestimmter Geschwindigkeitsintervalle vorgesehen werden.

Eine davon abgewandelte geschwindigkeitsabhängige Charakteristik 17 der Meldeschwelle ist in Figur 4 schematisch dargestellt. Hierbei wird vorgesehen, statt einer stetigen Abnahme der Meldeschwelle mit zunehmender Geschwindigkeit, die Meldeschwelle bei Geschwindigkeiten, welche typischerweise in Städten auftreten, ebenfalls geringer zu halten. Liegt die aktuelle Geschwindigkeit des Fahrzeugs über einen gewissen Zeitraum im Bereich der innerstädtisch zulässigen Höchstgeschwindigkeit, beispielsweise in Deutschland bei 50 km/h oder 30 km/h in einer Tempo 30-Zone, so ist die Wahrscheinlichkeit hoch, dass sich der Fahrer mit dem Fahrzeug gegenwärtig in einer Stadt befindet und damit eine erhöhte Aufmerksamkeit des Fahrers erforderlich ist da sich beispielsweise Fußgänger oder Fahrradfahrer unvorhergesehen vor das Auto begeben könnten. Liegt dagegen die aktuelle Geschwindigkeit des Fahrzeugs deutlich über diesen Geschwindigkeiten, beispielsweise bei 100 km/h, kann davon ausgegangen werden, dass sich das Fahrzeug gegenwärtig außerhalb einer geschlossenen Ortschaft auf einer Bundesstraße oder einer Autobahn befindet. Dort ist es erst bei hohen Geschwindigkeiten erforderlich, die Meldeschwelle wieder deutlich herabzusetzen. Eine solche Charakteristik kann permanent, d.h. unabhängig von den gerade vorliegenden Straßengegebenheiten, angewandt werden.

Ebenso ist es aber auch möglich, in Kombination mit einem Navigationsgerät des Fahrzeuges die Meldeschwelle automatisch an die aktuell vorliegenden

Straßengegebenheiten anzupassen, beispielsweise wenn sich auch aus der aktuellen Position des Fahrzeugs und dem Kartenmaterial ergibt, dass das Fahrzeug sich gegenwärtig im Stadtgebiet oder in einer Tempo 30-Zone befindet. Weiterhin ist es denkbar, zusätzlich auch Wetterverhältnisse zu berücksichtigen. Hierfür können sensorisch erfasste Wetterbedingungen, beispielsweise basierend auf einem Regensensor für die automatische Steuerung von Scheibenwischern des Fahrzeugs, oder auch Daten von Online-Wetterdiensten ausgewertet werden.

Das erfindungsgemäße Verfahren kann beispielsweise in einem Fahrerassistenzsystem oder einem zentralen Steuergerät des Fahrzeugs implementiert sein und durch einen Mikroprozessor durchgeführt werden. Dem Mikroprozessor können die erforderlichen Informationen über die aktuellen Fahrzeugparameter, wie die Geschwindigkeit oder die Betätigung von Brems- oder Gaspedal, und die Betätigung von Bedienelementen beispielsweise über einen Datenbus wie den CAN-Bus zugeführt werden. Die notwendigen Instruktionen und Wertetabellen zur Durchführung des Verfahrens können in einem internen elektronischen Speicher abgelegt sein.

### Bezugszeichenliste

- 1: Initialisierung
- 2: Ermittlung verschiedene Einflüsse auf die Fahreraufmerksamkeit
- 3: Anpassung Indexabnahme
- 4: Berechnung Aufmerksamkeitsindex entsprechend aktuell vorliegender Einflüsse
- 5: Überprüfung Schwellwerterreichung
- 6: Ausgabe Meldung
- 7: Erfassung Bedientätigkeit
- 8: Ermittlung Ablenkungswert für betätigtes Bedienelement
- 9: Berechnung Aufmerksamkeitsindex entsprechend betätigter Bedienelemente
- 10: Überprüfung Schwellwerterreichung
- 11: Überprüfung weitere Betätigung während vordefinierter Zeitspanne
- 12: Zurücksetzung bei ausbleibender weiterer Betätigung
- 13: Typischer zeitlicher Verlauf für den Aufmerksamkeitsindex des langfristigen Schätzers
- 14: Zeitlicher Verlauf für den Aufmerksamkeitsindex des langfristigen Schätzers bei maximalen Einflüssen
- 15: Zeitlicher Verlauf für den Aufmerksamkeitsindex des langfristigen Schätzers bei minimalen Einflüssen
- 16: Erste Schwellwertcharakteristik für den kurzfristigen Schätzer
- 17: Zweite Schwellwertcharakteristik für den kurzfristigen Schätzer

## Patentansprüche

1. Verfahren zur Schätzung der Aufmerksamkeit des Fahrers eines Fahrzeugs, bei dem
- mit einer langfristigen Schätzung der Aufmerksamkeit des Fahrers ein erster Aufmerksamkeitswert ermittelt (4) wird, wobei der erste Aufmerksamkeitswert
- ab Fahrtbeginn mit zunehmender Fahrdauer des Fahrzeugs abnimmt, und
- in geringerem Maß verringert wird, wenn eine Betätigung von Bedienelementen des Fahrzeugs durch den Fahrer erfasst wird;
- eine Betätigung von Bedienelementen des Fahrzeugs durch den Fahrer erfasst (7) wird;
- basierend auf der erfassten Betätigung mit einer kurzfristigen Schätzung der Aufmerksamkeit des Fahrers ein zweiter Aufmerksamkeitswert ermittelt (9) wird, wobei der zweite Aufmerksamkeitswert
- eine Schätzung der Ablenkung des Fahrers durch eine Betätigung von Bedienelementen des Fahrzeugs durch den Fahrer angibt,
- in Abhängigkeit von der Komplexität, Erreichbarkeit und/oder dem Feedback des jeweils betätigten Bedienelements verändert wird, wobei unterschiedlichen Bedienelementen je nach deren Komplexität, Erreichbarkeit und/oder dem Feedback unterschiedliche vordefinierte Werte zugewiesen sind, und
- ausgehend von einem Startwert bei Erfassung einer erstmaligen Betätigung eines Bedienelements und bei darauf folgenden Betätigungen von Bedienelementen, die nach der vorherigen Betätigung eines Bedienelement innerhalb einer vordefinierten Zeitspanne erfolgen, jeweils um einen dem betätigten Bedienelement zugewiesenen Wert erhöht (9) wird und auf den Startwert zurückgesetzt wird, wenn innerhalb der vordefinierten Zeitspanne keine Betätigung eines Bedienelement erfasst wurde.

2. Verfahren nach Anspruch 1, wobei in Abhängigkeit von dem ersten und/oder zweiten Aufmerksamkeitswert eine Meldung an den Fahrer ausgegeben (6) oder eine Fahrzeugfunktion ausgelöst wird.

3. Verfahren nach Anspruch 1 oder 2, wobei für die langfristige Schätzung zusätzlich einer oder mehrere der folgenden Parameter ermittelt (2) werden:
- ein die Monotonie der Fahraufgabe wiedergebender Monotoniewert, der aus erfassten Fahrzeugparametern errechnet wird;
- eine Nutzung einer Telefoniefunktion des Fahrzeugs durch den Fahrer;
- eine Uhrzeit, die dem Zeitpunkt, zu der die Fahrt angetreten wurde, oder dem aktuellen Zeitpunkt entspricht; und
der erste Aufmerksamkeitswert in Abhängigkeit von dem ermittelten Parameter unterschiedlich stark (3) abnimmt.

4. Verfahren nach einem der Ansprüche 2 bis 3, wobei eine Meldung mit Pausenempfehlung an den Fahrer ausgegeben wird oder ein teil- oder vollautonomer Fahrmodus aktiviert wird, wenn der erste Aufmerksamkeitswert einen vordefinierten Schwellwert erreicht oder unterschreitet (5).

5. Verfahren nach einem der Ansprüche 2 bis 4, wobei eine Meldung mit einer Aufforderung zur Rückbesinnung auf die primäre Fahraufgabe an den Fahrer ausgegeben wird, wenn der zweite Aufmerksamkeitswert einen vordefinierten Schwellwert erreicht oder überschreitet (10).

6. Verfahren nach Anspruch 5, wobei der vordefinierte Schwellwert für den zweiten Aufmerksamkeitswert von der aktuellen Geschwindigkeit des Fahrzeugs abhängt.

7. Vorrichtung, die eingerichtet ist, ein Verfahren gemäß einem der Ansprüche 1 bis 6 auszuführen.

8. Kraftfahrzeug, das eingerichtet ist, ein Verfahren gemäß einem der Ansprüche 1 bis 6 auszuführen oder eine Vorrichtung gemäß Anspruch 7 aufweist.

## Claims

1. Method for estimating the attention of the driver of a vehicle, in which
- a first attention score is determined (4) using a long-term estimate of the attention of the driver, wherein the first attention score
- decreases from the start of the journey as the journey time of the vehicle increases, and
- is reduced to a lesser extent if operation of control elements of the vehicle by the driver is detected;
- operation of control elements of the vehicle by the driver is detected (7);
- on the basis of the detected activity, with a short-term estimate of the attention of the driver, a second attention score is determined (9), wherein the second attention score
- provides an estimate of the distraction of the driver caused by operation of the control elements of the vehicle by the driver,
- is changed depending on the complexity, accessibility and/or feedback of the particular control element, wherein different predefined values are assigned to different control elements depending on their complexity, accessibility and/or feedback, and
- starting from a starting value when a control element is operated for the first time, and for subsequent operations of control elements that occur after the previous operation of a control element within a predefined time period, is increased (9) by a value assigned to the operated control element and is reset to the starting value if no operation of a control element has been detected within the predefined time period.

2. Method according to claim 1, wherein, depending on the first and/or second attention value, a message is issued (6) to the driver or a vehicle function is triggered.

3. Method according to claim 1 or 2, wherein for the long-term estimate one or more of the following parameters are additionally determined (2):
- a monotony value reflecting the monotony of the driving task, which is calculated from detected vehicle parameters;
- use of a telephone function of the vehicle by the driver;
- a time corresponding to the point in time when the journey began or to the current time; and
the first attention value decreases to a different extent (3) depending on the determined parameter.

4. Method according to one of claims 2 to 3, wherein a message with a break recommendation is issued to the driver or a semi-autonomous or fully autonomous driving mode is activated when the first attention value reaches or falls below (5) a predefined threshold.

5. Method according to any of claims 2 to 4, wherein a message with a request to return to the primary driving task is issued to the driver when the second attention value reaches or exceeds (10) a predefined threshold.

6. Method according to claim 5, wherein the predefined threshold for the second attention value depends on the current speed of the vehicle.

7. Device configured to carry out a method according to any of claims 1 to 6.

8. Motor vehicle configured to carry out a method according to any of claims 1 to 6 or having a device according to claim 7.

## Revendications

1. Procédé pour l'estimation de l'attention du conducteur d'un véhicule, dans lequel
- une première valeur d'attention est déterminée (4) avec une estimation à long terme de l'attention du conducteur, dans lequel la première valeur d'attention
- diminue, à partir du début de trajet, à mesure que la durée de conduite du véhicule augmente, et
- est réduite dans une moindre mesure lorsqu'un actionnement d'éléments de commande du véhicule par le conducteur est détecté ;
- un actionnement d'éléments de commande du véhicule par le conducteur est détecté (7) ;
- une seconde valeur d'attention est déterminée (9) sur la base de l'actionnement détecté avec une estimation à court terme de l'attention du conducteur, dans lequel la seconde valeur d'attention
- indique une estimation de la distraction du conducteur en raison d'un actionnement d'éléments de commande du véhicule par le conducteur,
- est modifiée en fonction de la complexité, de l'accessibilité et/ou de la rétroaction de l'élément de commande respectivement actionné, dans lequel différentes valeurs prédéfinies sont attribuées à différents éléments de commande en fonction de leur complexité, de leur accessibilité et/ou da rétroaction, et
- est, en partant d'une valeur de départ lors de la détection d'un premier actionnement d'un élément de commande et lors d'actionnements ultérieurs d'éléments de commande, lesquels ont lieu après l'actionnement précédent d'un élément de commande dans un laps de temps prédéfini, respectivement augmentée (9) d'une valeur attribuée à l'élément de commande actionné, et est remise à la valeur de départ lorsqu'aucun actionnement d'un élément de commande n'est détecté dans le laps de temps prédéfini.

2. Procédé selon la revendication 1, dans lequel, en fonction de la première et/ou de la seconde valeur d'attention, un message est émis (6) à l'attention du conducteur ou une fonction de véhicule est déclenchée.

3. Procédé selon la revendication 1 ou 2, dans lequel, pour l'estimation à long terme, un ou plusieurs des paramètres suivants sont en outre déterminés (2) :
- une valeur de monotonie reflétant la monotonie de la tâche de conduite, laquelle est calculée à partir de paramètres de véhicule détectés ;
- une utilisation d'une fonction de téléphonie du véhicule par le conducteur ;
- une heure qui correspond à l'instant où le trajet a commencé ou à l'heure actuelle ; et
la première valeur d'attention diminue plus ou moins fortement (3) en fonction du paramètre déterminé.

4. Procédé selon l'une des revendications 2 à 3, dans lequel un message comportant une recommandation de pause est émis à l'attention du conducteur, ou un mode de conduite partiellement ou entièrement autonome est activé lorsque la première valeur d'attention atteint ou passe en dessous (5) d'une valeur seuil prédéfinie.

5. Procédé selon l'une des revendications 2 à 4, dans lequel un message comportant une invitation au retour à la tâche de conduite primaire est émis à l'attention du conducteur lorsque la seconde valeur d'attention atteint ou dépasse une valeur seuil (10) prédéfinie.

6. Procédé selon la revendication 5, dans lequel la valeur seuil prédéfinie pour la seconde valeur d'attention dépend de la vitesse actuelle du véhicule.

7. Dispositif, lequel est configuré pour mettre en œuvre un procédé selon l'une des revendications 1 à 6.

8. Véhicule automobile, lequel est configuré pour mettre en œuvre un procédé selon l'une des revendications 1 à 6 ou présente un dispositif selon la revendication 7.
